# EUROPEAN PATENT APPLICATION

(11) **EP 4 410 651 A1**
(43) Date of publication of application: **07.08.2024**
(21) Application number: 23155173.0
(22) Date of filing: 06.02.2023
(51) Int. Cl.: B62M 6/45

(54) **METHOD FOR ADAPTING A POWER ASSISTANCE PROVIDED BY A DRIVE MOTOR OF AN ELECTRICALLY DRIVEABLE OR DRIVEN BICYCLE, METHOD FOR PROVIDING PRE-TRAINED EVALUATION ALGORITHMS, ASSISTANCE SYSTEM FOR A BICYCLE AND BICYCLE HAVING SUCH AN ASSISTANCE SYSTEM**

(71) Applicant: MAHLE International GmbH, 70376 Stuttgart (DE)
(72) Inventor: RAKHNENKO, Yaroslav, 34005 Palencia (ES); RICO SANZ, Alberto Jesus, 47007 Valladolid (ES)
(74) Representative: BRP Renaud & Partner mbB Rechtsanwälte Patentanwälte Steuerberater

(57) **Abstract**

The present invention relates to a method (1) for adapting power assistance (7) provided by a drive motor of an electrically driveable or driven bicycle according to claim 1. The invention relates in particular to a method for providing pre-trained evaluation algorithms (3), further in particular an assistance system for a bicycle and further in particular a bicycle having such an assistance system.

## Description

The invention relates to a method for adapting a power assistance provided by a drive motor of an electrically driveable or driven bicycle according to claim 1. The invention relates in particular to a method for providing pre-trained evaluation algorithms, further in particular to an assistance system for such a bicycle and further in particular to a bicycle having such an assistance system.

Modern electrically driveable or driven bicycles such as Pedelecs or E-bikes are equipped with assistance systems. By way of these, a rider of such a bicycle (rider in the following) can activate in particular a power assistance provided by a drive motor of the bicycle by levels of assistance that differ with respect to their drive power. Of late, the assistance systems have also been equipped to automatically adapt the power assistance while riding. However, such assistance systems do not operate optimally since they do not take into account the behaviour of the rider such as for example posture, the steering behaviour, the pedal frequency or a pedal torque generated by muscle power, as decision-making basis for adapting the power assistance. Because of this, the rider is not optimally assisted and has to manually readjust the power assistance if required, both of which likewise contributes to rapid exhaustion and to a negative comfort experience.

The object of the invention therefore consists in stating an improved or at least another embodiment for a method for adapting a power assistance provided by a drive motor of an electrically driveable bicycle. In particular, an assistance system for a bicycle is to be provided, which is equipped for carrying out the proposed method. Further, in particular, a bicycle is to be stated that is equipped with such an assistance system.

In the present invention, this object is achieved in particular through the subjects of the independent claims. Advantageous embodiments are subject of the dependent claims and of the description.

The invention has recognised that the behaviour of the rider can change substantially while riding along a specified route because of different influences, for example external influences such as the type of terrain travelled on or the current weather (wind, rain, snow, etc.) or internal influences such as the performance of the rider or the tiring of the rider or a level of power assistance selected by the rider. The invention, furthermore, has recognised that the current behaviour of the rider, which manifests itself in different states of behaviour of the rider such as for example the rider's posture, the rider's steering behaviour, the rider's pedal frequency or the rider's pedal torque generated by muscle power, is an important indicator for a required adaptation of the power assistance provided by the drive motor.

Before this background, the invention proposes a method for adapting a power assistance provided by a drive motor of an electrically driveable or driven bicycle, in particular a Pedelec or an E-bike as a function of rider behaviour information determined during the operation of the bicycle. The method includes the steps:
1) implementing a group of pre-trained evaluation algorithms for evaluating rider behaviour information in a control component of the bicycle, which is equipped to run the evaluation algorithms,
2) putting into operation of the bicycle,
3) providing rider behaviour information determined during the operation of the bicycle to the evaluation algorithms,
4) carrying out the evaluation algorithms in the control component, wherein by way of the evaluation algorithms an evaluation of the rider behaviour information is carried out and wherein the evaluation algorithms generate evaluation informed based on the respective evaluation,
5) providing the evaluation information to an adaptation algorithm implemented in the control component, wherein the control component is equipped to run the adaptation algorithm,
6) evaluating the evaluation information by the adaptation algorithm, wherein the adaptation algorithm generates adaptation information based on the evaluation,
7) adapting a power assistance provided by the drive motor of the electrically driveable or driven bicycle by the control component as a function of the adaptation information.

By way of the proposed method it is possible for the first time to adapt, while riding, i.e. during the operation of the bicycle, the power assistance provided by the drive motor as a function of rider behaviour information which practically describes the behaviour of the rider during the operation of the bicycle. This has the advantage that the power assistance can be optimally matched to the behaviour of the rider or internal and/or external influences, as a result of which an optimal assistance of the rider is ensured and the rider's performance can be maintained.

The said method, i.e. in particular the said steps 3) to 7) or at least the adaptation of the power assistance can be preferentially carried out instantaneously or in real time, so that the power assistance can be optimally adapted to the current behaviour of the rider at any time.

The rider behaviour information practically includes information regarding the behaviour of the rider during the operation of the bicycle. The behaviour of the rider can be manifested by different behavioural states of the rider such as for example the rider's posture, the rider's steering behaviour, the rider's pedal frequency or the rider's pedal torque generated by muscle power. Further practically, the rider behaviour information comprises bicycle-based bicycle information and/or rider-based rider information. Rider information is for example information such as describes the position and/or the behaviour of the bicycle, such as for example the acceleration of the bicycle, a selected level of assistance of the power assistance provided by the drive motor or a current drive power of the drive motor. Rider information is for example such information as describes the position and/or the behaviour of the rider, such as for example the abovementioned behavioural states of the rider: posture, steering behaviour, pedal frequency generated by the rider's muscle power.

The rider behaviour information or the bicycle and/or rider information can be determined during the operation of the bicycle by at least one sensor of the bicycle and be additionally or alternatively provided by a field bus of the bicycle, in particular a CAN bus of the bicycle. This is for example a sensor of the bicycle integrated in the control component, for example a human-machine interface of the bicycle referred to as HMI. The rider behaviour information or bicycle and/or rider information can, further be formed by acceleration data of an accelerometer and/or acceleration data of a gyroscope and/or of pedal frequency data of the rider of a pedal frequency sensor and/or of steering angle data of a steering angle sensor. This data allows drawing a direct or at least indirect conclusion regarding the posture of the rider, the steering behaviour of the rider, the pedal frequency of the rider or the muscle power of the rider.

Practically, in the understanding of the invention, an algorithm is a rule of action realised for example by a software programme or a software sub-programme or commands that are executable on a computer or a device able to compute, which rule of action is equipped for the step-by-step processing of a specified task.

Evaluation algorithms in terms of the invention are algorithms which by way of rider behaviour information provided to the evaluation algorithms evaluate the current human behaviour of the rider of the bicycle during the operation of the bicycle. Based on this evaluation, an unambiguous assignment of the current human behaviour of the rider to an unambiguous behavioural category of a group consisting of multiple specified behavioural categories can be made. Corresponding specified behavioural categories of the rider can be for example: standing, sitting, sprinting. The rider behavioural algorithms, further, are practically equipped to provide, evaluation information in each case. The evaluation information can be formed by the determined behavioural category for example in the form "standing", "sitting" or "sprinting".

Pre-trained evaluation algorithms in terms of the invention are such evaluation algorithms which are produced prior to the purchase of the bicycle or prior to the initial use of the bicycle, during the development or manufacture of the bicycle, for example at the manufacturer's works and are equipped for implementation in a control component of the bicycle. Practically, the pre-trained evaluation algorithms are implemented in a control component of the bicycle prior to the initial sale of the bicycle by the manufacturer or prior to the initial use of the bicycle. Practically, the pre-trained evaluation algorithms are produced and provided in a step preceding in time the said step 1) of the method carried out outside the bicycle.

The pre-trained evaluation algorithms can be weighted or weightable by the rider. Because of this, the importance of one or more pre-trained evaluation algorithms in the evaluation by the adaptation algorithm can be increased or reduced. This has the advantage that for example personal preferences of the rider and/or works specifications and/or characteristics of the bicycle can be taken into account when adapting the power assistance.

Practically, the adaptation algorithm is equipped to carry out a decision-making (for example a decision tree evaluation) by way of the provided evaluation information. In the evaluation of the evaluation information, binary results can be provided and evaluated.

The said adaptation of the power assistance provided by the drive motor of the electrically driveable bicycle can be realised by an increase of the degree of assistance of the rider and/or the change of the percentage rate of the drive power of the drive motor and/or the change of the acceleration behaviour of the drive motor and/or the change of the torque of the drive motor.

The control component can be formed in particular by a human-machine interface of the bicycle referred to in the following as HMI or any other electronic control unit on the telematics of the said bicycle.

According to a further idea of the invention, a method for providing pre-trained evaluation algorithms suitable for the method according to any one of the preceding claims is provided. The method for providing the pre-trained evaluation algorithm includes in particular the steps:
1) providing in a computing component expected, i.e. possible, behavioural states of the rider (behaviour of the rider) during the operation of the bicycle, i.e. while riding, such as for example standing, sitting or sprinting, in a computing component which is operated in particular externally of a bicycle or within a bicycle or within bicycle telematics of a bicycle, and
2) providing in the computing component expected, i.e. possible, sensor data of a sensor of the bicycle, for example acceleration data of an accelerometer and/or gyroscope and/or the pedal frequency of the rider, and
3) generating pre-trained evaluation algorithms by way of the provided behavioural states of the rider and the sensor data.

By way of this, pre-trained evaluation algorithms based on possible behavioural states of the rider and possible sensor data of the bicycle are produced.

The above method for providing the pre-trained evaluation algorithms can utilise a machine learning-enabled sensor of the bicycle, in particular an acceleration sensor, and/or an inertial measurement unit of the bicycle and/or a computing device of the bicycle. The sensor, in particular the acceleration sensor, can be implemented in the control component of the bicycle, in particular the said HMI. The sensor can be machine learning-enabled. The sensor can utilise "classification and regression model algorithms". In providing the pre-trained evaluation algorithms, algorithms of machine learning can be used.

According to a further idea of the invention, an assistance system for a bicycle, in particular a Pedelec or an E-bike is proposed, which comprises commands which when the assistance system is carried out by a control component of the bicycle, prompt the same to carry out the steps of the method described above for adapting a power assistance provided by a drive motor of an electrically driveable or driven bicycle, in particular a Pedelec or an E-bike as a function of rider behaviour information determined during the operation of the bicycle. Because of this, an advantageous assistance system for a bicycle is stated, by way of which an optimal assistance of the rider is ensured and the performance of the same can be maintained.

According to a further idea of the invention, a bicycle, in particular a Pedelec or an E-bike, is additionally proposed which is equipped with an assistance system according to the above description. By way of this, an advantageous bicycle is stated which, by way of the innovative assistance system, provides the rider with an optimal comfort experience.

In summary, it should be noted: the present invention preferentially relates to a method for adapting a power assistance provided by a drive motor of an electrically driveable or driven bicycle according to the above description. In particular, the invention relates to a method for providing pre-trained evaluation algorithms, further in particular an assistance system for a bicycle and further in particular a bicycle having such an assistance system.

Further important features and advantages of the invention are obtained from the subclaims, from the drawing and from the associated figure description by way of the drawing.

It is to be understood that the features mentioned above and still to be explained in the following cannot only be used in the respective combination stated, but also in other combinations or by themselves without leaving the scope of the present invention.

Preferred embodiments of the invention are shown in the drawing and are explained in more detail in the following description, wherein same reference numbers relate to same or similar or functionally same components.

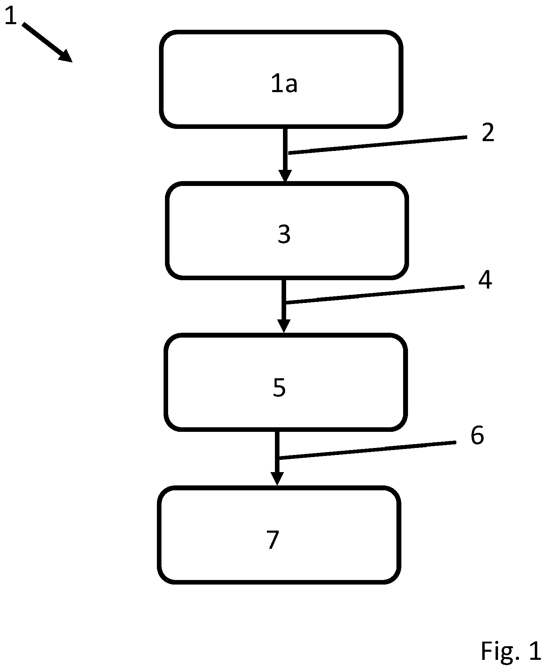

It shows, schematically
- Fig. 1:: a highly simplified process diagram of the method according to the invention for adapting power assistance provided by a drive motor of an electrically driveable or driven bicycle, in particular a Pedelec or an E-bike as a function of rider behaviour information determined during the operation of the bicycle.

Fig. 1 shows a preferred embodiment of a method for adapting power assistance 7 provided by a drive motor of an electrically driveable or driven bicycle, in particular a Pedelec or an E-bike, as a function of rider behaviour information 2 determined during the operation of the bicycle designated in its entirety by the reference number 1. The rider behaviour information 2 is exemplary information regarding the behaviour of the rider during the operation of the bicycle. The behaviour of the rider can be realised by different behavioural states of the rider such as for example the rider's posture, the rider's steering behaviour, the rider's pedal frequency or the rider's pedal torque generated by muscle power. Further practically, the rider behaviour information 2 comprises bicycle-based bicycle information and/or rider-based rider information. Bicycle information is for example such information as describes the position and/or the behaviour of the bicycle, such as for example the acceleration of the bicycle, a selected level of power assistance 7 provided by the drive motor or a current drive power of the drive motor. Rider information is for example information which describes the position and/or the behaviour of the rider, such as for example the abovementioned behavioural states of the rider: posture, steering behaviour, pedal frequency or a pedal torque generated by the muscle power of the rider. The rider behavioural information 2 can be determined during the operation of the bicycle by at least one sensor of the bicycle and additionally or alternatively provided to a field bus of the bicycle, in particular a CAN bus of the bicycle. The bicycle and/or rider information can be formed by acceleration data of an accelerometer and/or of acceleration data of a gyroscope and/or of pedal frequency data of the rider of a pedal frequency sensor and/or of steering angle data of a steering angle sensor. These data allow drawing a direct or at least indirect conclusion regarding the posture of the rider, the steering behaviour of the rider, the pedal frequency of the rider or the muscle power of the rider.

The proposed method includes the steps:
1) implementing a group of pre-trained evaluation algorithms 3 for evaluating rider behaviour information 2 in a control component of the bicycle which is equipped to run the evaluation algorithms,
2) putting into operation 1a of the bicycle,
3) providing rider behaviour information 2 determined during the operation of the bicycle to the evaluation algorithms 3,
4) carrying out the evaluation algorithms 3 in the control component, wherein by way of the evaluation algorithms 3 an evaluation of the rider behaviour information 2 is carried out and wherein the evaluation algorithms 3 generate evaluation information 4 based on the respective evaluation,
5) providing the evaluation information 4 to an adaptation algorithm 5 implemented in the control component, wherein the control component is equipped to run the adaptation algorithm 5,
6) evaluating the evaluation information 4 by the adaptation algorithm 5, wherein the adaptation algorithm 5 generates adaptation information 6 based on the evaluation,
7) adapting a power assistance 7 provided by the drive motor of the electrically driveable or driven bicycle by the control component as a function of the adaptation information 6).

## Claims

1. A method (1) for adapting a power assistance (7) provided by a drive motor of an electrically driveable or driven bicycle, in particular a Pedelec or an E-bike, as a function of rider behaviour information (2) determined during the operation of the bicycle, having the steps:
1) implementing a group of pre-trained evaluation algorithms (3) for evaluating rider behaviour information (2) in a control component of the bicycle, which is equipped to run the evaluation algorithms (3),
2) putting into operation (1a) of the bicycle,
3) providing rider behaviour information (2) determined during the operation of the bicycle to the evaluation algorithms (3),
4) carrying out the evaluation algorithms (3) in the control component, wherein by way of the evaluation algorithms (3) an evaluation of the rider behaviour information (2) is carried out and wherein the evaluation algorithms (3) generate evaluation information (4) based on the respective evaluation,
5) providing the evaluation information (4) to an adaptation algorithm (5) implemented in the control component, wherein the control component is equipped to run the adaptation algorithm (5),
6) evaluating the evaluation information (4) by the adaptation algorithm (5), wherein the adaptation algorithm (5) generates adaptation information (6) based on the evaluation,
7) adapting a power assistance (7) provided by the drive motor of the electrically driveable or driven bicycle by the control component as a function of the adaptation information (6).

2. The method (1) according to claim 1,
**characterised in that**
the said steps 3) to 7) of the method, in particular adapting the power assistance (7), are carried out instantaneously or in real time.

3. The method (1) according to claim 1 or 2,
**characterised in that**
the rider behaviour information (2) is formed from:
- information determined during the operation of the bicycle regarding behaviour of the rider, so-called rider information, in particular behavioural states of the rider such as for example the rider's posture, the rider's steering behaviour, the rider's pedal frequency or the rider's pedal torque generated by muscle power and/or
- information determined during the operation of the bicycle regarding the behaviour of the bicycle, so-called bicycle information, in particular the position and/or the behaviour of the bicycle and/or the acceleration of the bicycle and/or a selected level of assistance of the power assistance (7) provided by the drive motor and/or a current drive power of the drive motor.

4. The method (1) according to any one of the preceding claims,
**characterised in that**
the rider behaviour information (2) or the bicycle and/or rider information according to claim 3
- are determined during the operation of the bicycle by at least one sensor of the bicycle, and/or
- are provided by a field bus of the bicycle, in particular a CAN bus of the bicycle.

5. The method (1) according to any one of the preceding claims,
**characterised in that**
- the evaluation algorithms (3) prior to the initial use of the bicycle by the rider, are for example factory-produced and equipped for being implemented in a control component of the bicycle.

6. The method (1) according to any one of the preceding claims,
**characterised in that**
- the evaluation algorithms (3) are weighted or configured so as to be weightable by the rider.

7. The method (1) according to any one of the preceding claims,
**characterised in that**
- the adaptation of the power assistance (7) provided by the drive motor of the electrically driveable bicycle according to step 7) is realised by increasing the degree of assistance of the rider or changing the percentage rate of the drive power of the drive motor or changing the acceleration behaviour of the drive motor or changing the torque of the drive motor.

8. The method (1) according to any one of the preceding claims,
**characterised in that**
- the control component is formed by a human-machine interface of the bicycle.

9. The method (1) according to any one of the preceding claims,
**characterised in that**
the evaluation algorithms (3) are generated outside the bicycle in a step of
the method (1) preceding the step 1).

10. A Method for providing pre-trained evaluation algorithms (3) suitable for the method (1) according to any one of the preceding claims,
**characterised by** the steps:
1) providing behavioural states of the rider (behaviour of the rider) expected during the operation of the bicycle, for example standing, sitting or sprinting, in a computing component which is operated in particular externally of a bicycle or within a bicycle, and
2) providing sensor data of a sensor of the bicycle expected during the operation of the bicycle, for example acceleration data of an accelerometer and/or gyroscope and/or the pedal frequency of the rider in the computing component, and
3) generating pre-trained evaluation algorithms (3) by way of the provided behavioural states and the sensor data.

11. The method according to claim 10,
**characterised in that**
in providing the pre-trained evaluation algorithms (3), algorithms of machine learning are used.

12. An assistance system for a bicycle, in particular a Pedelec or an E-bike, which comprises commands which, when the assistance system is carried out by a control component of the bicycle, cause the assistance system to carry out the steps of the method (1) according to any one of the claims 1 to 9.

13. A bicycle, in particular a Pedelec or an E-bike, which is equipped with an assistance system according to claim 12.
